## Europäisches Patentamt

## European Patent Office

## Office européen des brevets

(11) Veröffentlichungsnummer: **0 407 733 A1**

# EUROPÄISCHE PATENTANMELDUNG

(21) Anmeldenummer: **90110561.9**

(51) Int. Cl.5: **F16C 41/04**

(22) Anmeldetag: **05.06.90**

(30) Priorität: **13.07.89 DE 3923111**

(43) Veröffentlichungstag der Anmeldung:
**16.01.91 Patentblatt 91/03**

(84) Benannte Vertragsstaaten:
**DE ES FR GB IT**

(71) Anmelder: **INA Wälzlager Schaeffler KG**
**Industriestrasse 1-3 Postfach 1220**
**D-8522 Herzogenaurach(DE)**

(72) Erfinder: **Haase, Henry, Dipl.-Ing.**
**Dierath 50**
**D-5653 Leichlingen(DE)**
Erfinder: **Schneider, Joachim, Dipl.-Ing.**
**Haydnstrasse 52**
**D-4000 Düsseldorf(DE)**
Erfinder: **Alber, Pierre**
**5, Impasse des Tilleuls**
**F-67100 Reichshoffen(FR)**

(74) Vertreter: **Klug, Horst, Dipl.-Ing. (FH)**
**c/o INA Wälzlager Schaeffler KG Postfach 12 20**
**D-8522 Herzogenaurach(DE)**

(54) **Radial-Wälzlager.**

(57) Bei einem Radialwälzlager, bestehend aus einem Außenlaufring 1, in dessen Bohrung ein Kranz von zylindrischen Wälzkörpern 2 angeordnet ist, die durch ein in die Lagerbohrung eingesetztes elastisches Halteelement 11 gegen Herausfallen radial nach innen gehalten sind, und an deren beiden Stirnseiten Anlaufborde 3, 4 zu ihrer axialen Fixierung vorgesehen sind, wird eine transport- und einbaufähige Lagereinheit dadurch geschaffen, daß wenigstens der eine Anlaufbord durch eine lose Bordscheibe 4 gebildet ist, die durch das elastische Halteelement 11 in ihrer Position gehalten ist.

Fig. 1

## RADIAL-WÄLZLAGER

Die Erfindung betrifft ein Radial-Wälzlager, bestehend aus einem Außenlaufring, in dessen Bohrung ein Kranz von zylindrischen Wälzkörpern angeordnet ist, die durch ein in die Lagerbohrung eingesetztes elastisches Halteelement gegen Herausfallen radial nach innen gehalten sind, und an deren beiden Stirnseiten Anlaufborde zu ihrer axialen Fixierung vorgesehen sind.

Bei einem bekannten derartigen Lager sind in einer dünnwandigen Hülse, die an beiden Enden angeformte Anlaufborde aufweist, dicht beieinanderliegende Lagernadeln untergebracht, die durch ein vorzugsweise aus Schaumstoff bestehendes elastisches Halteelement gegen Herausfallen radial nach innen gehalten sind (DE-GM 19 64 034). Auf diese Weise ist eine ohne Verlust von Lagernadeln transport- und einbaufähige Lagereinheit geschaffen.

Es gibt Anwendungsfälle, in denen es zweckmäßig ist, wenigstens den einen Anlaufbord nicht einstückig mit dem Laufring auszubilden. Der Erfindung liegt die Aufgabe zugrunde, auch in diesen Fällen eine Lagereinheit zu schaffen, die ohne Beschädigung und ohne Verlust von Wälzkörpern transport- und einbaufähig ist.

Die Erfindung löst diese Aufgabe dadurch, daß bei einem Radial-Wälzlager der genannten Gattung wenigstens der eine Anlaufbord durch eine lose Bordscheibe gebildet ist, die durch das elastische Halteelement in ihrer Position gehalten ist. Das Halteelement übernimmt dabei nicht nur die Halterung der Wälzkörper gegen Herausfallen radial nach innen, sondern gleichzeitig auch deren Fixierung in axialer Richtung dadurch, daß es die lose Bordscheibe in der dafür erforderlichen Position festhält.

In einem radial äußeren Durchmesserbereich kann die Bordscheibe eben ausgebildet sein, mit diesem ebenen Bereich gegen eine Stirnfläche des Außenlaufringes anliegen und den Außendurchmesser des Außenlaufringes an wenigstens einigen Umfangsstellen radial überragen. Dies kann dann zweckmäßig sein, wenn auf der äußeren Mantelfläche des Außenlaufringes ein weiteres verschiebliches Teil angeordnet ist, welches so durch die Bordscheibe am Herunterrutschen vom Außenlaufring gehindert ist.

Das elastische Halteelement kann in zweckmäßiger Weise durch ein rohrförmiges Teil gebildet sein, von dessen Mantelfläche sich trichterförmige nach außen erweiternde Lamellen ausgehen, die unter elastischer Vorspannung an den Wälzkörpern anliegen. Das rohrförmige Teil kann dabei an seinem der Bordscheibe entgegengesetzten Ende durch einen Boden verschlossen sein.

Es ist zweckmäßig, die Lamellen so auszubilden, daß sie sich zum Boden hin im Durchmesser erweitern.

Um die lose Bordscheibe in ihrer Position zu halten, kann das rohrförmige Teil an seinem dem Boden entgegengesetzten Ende einen Außendurchmesser aufweisen, der annähernd dem Bohrungsdurchmesser der Bordscheibe entspricht, wobei dieses Ende wenigstens eine Haltenase aufweist, die die Bordscheibe an ihrer dem Wälzlager abgekehrten Seite hintergreift.

Das Halteelement kann zweckmäßigerweise z. B. durch Spritzen aus polymerem Werkstoff hergestellt sein.

In den Zeichnungen ist die Erfindung anhand eines Ausführungsbeispieles dargestellt. Es zeigen jeweils im Längsschnitt:

Fig. 1 das erfindungsgemäße Wälzlager im Anlieferzustand und

Fig. 2 das Lager nach dem Einsetzen einer Welle.

In beiden Figuren ist die Erfindung dargestellt am Beispiel einer wälzgelagerten Rolle, wie sie in Tripode-Wellengelenken verwendet wird. Die Rolle besteht aus dem Außenlaufring 1, in dessen Bohrung dicht beieinanderliegende zylindrische Wälzkörper 2 angeordnet sind. Am einen Ende des einen Außenlaufringes 1 ist ein Anlaufbord 3 eingepreßt. Am entgegengesetzten Ende ist eine lose Bordscheibe 4 vorgesehen, die mit einem ebenen Bereich 5 gegen eine plane Stirnfläche 6 des Außenlaufringes 1 anliegt. Zu ihrer Mitte hin schließt sich ein gekrümmter Bereich 7 an, gegen den die Wälzkörper 2 anlaufen können und der in eine trichterförmige Verengung 8 übergeht, die durch Einschnitte in einzelne Zungen 9 unterteilt ist. In ihrem äußeren Bereich überragt die lose Bordscheibe 4 den Außendurchmesser des Außenlaufringes 1, wodurch gewährleistet ist, daß der verschieblich auf dem Außenlaufring 1 angeordnete Kugelring 10 daran gehindert wird, nach links von dem Außenlaufring zu gleiten.

Zur Halterung sowohl der Wälzkörper 2 gegen Herausfallen radial nach innen, als auch der losen Bordscheibe 4 in ihrer Position ist ein elastisches Halteelement 11 vorgesehen, welches aus einem rohrförmigen Teil 12 besteht, welches - wie dargestellt - Bereiche mit unterschiedlichen Durchmessern aufweisen kann, und von dessen Mantelfläche sich trichterförmig nach außen erweiternde Lamellen 13 ausgehen, die unter elastischer Vorspannung an den Wälzkörpern 2 anliegen. An seinem der losen Bordscheibe 4 entgegengesetzten Ende ist das rohrförmige Teil 12 durch einen Boden 14 verschlossen.

An seinem dem Boden 14 entgegengesetzten Ende 15 weist das rohrförmige Teil einen Außendurchmesser auf, der dem Bohrungsdurchmesser der Bordscheibe 4 im Bereich der Zungen 9 entspricht. Das Ende weist zusätzlich eine sich über den Umfang erstreckende Haltenase 16 auf, welche die Bordscheibe 4 an ihrer dem Wälzlager abgekehrten Seite hintergreift.

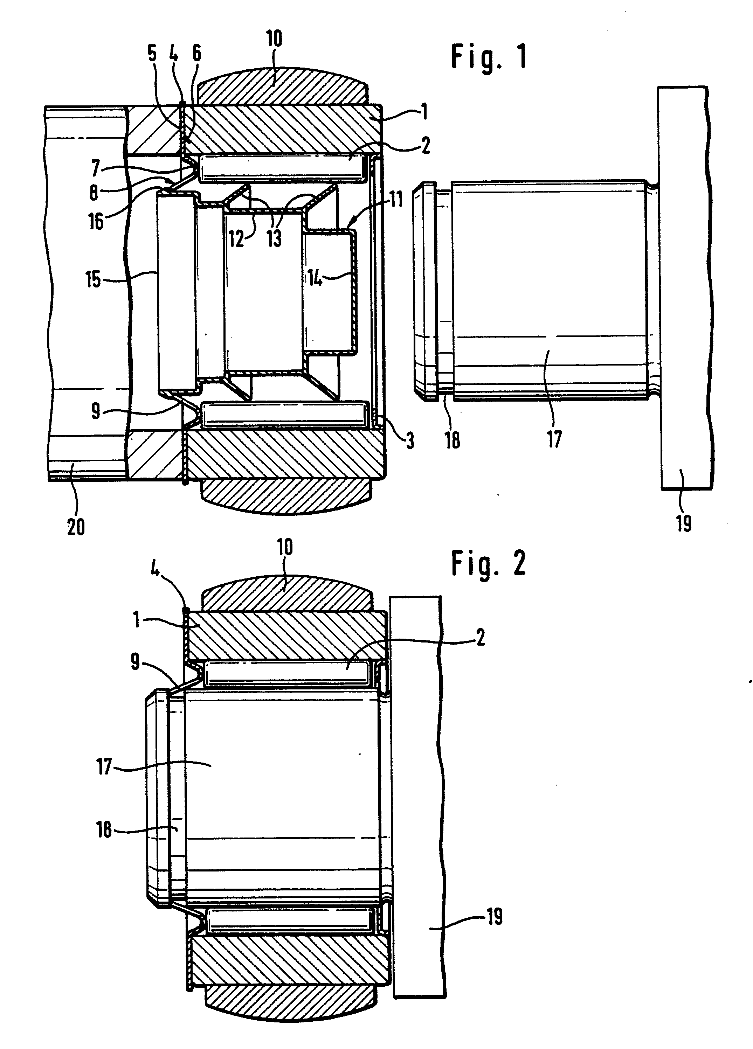

In Figur 1 ist rechts von der wälzgelagerten Rolle eine Welle 17 dargestellt, die eine Umfangsnut 18 aufweist und die an ihrem anderen Ende in einen Gehäuseabsatz 19 übergeht. Diese Welle 17 soll in die wälzgelagerte Rolle eingeführt werden. Zu diesem Zweck wird die Rolle zusammen mit der losen Bordscheibe 4 gegen ein Rohr 20 abgestützt, wodurch beim Einführen der Welle 17 die lose Bordscheibe 4 in ihrer Lage festgehalten wird, wobei gleichzeitig das elastische Halteelement 11 nach links ausgestoßen und durch die Bohrung des Rohres 20 hindurch abgeführt wird.

In Figur 2 ist die wälzgelagerte Rolle nach ihrer Montage auf der Welle 17 dargestellt. Der Bohrungsdurchmesser der Bordscheibe 4 ist kleiner als der innere Hüllkreisdurchmesser der Wälzkörper 2. Daher sind die den inneren Rand der Bordscheibe 4 bildenden Zungen 9 in die Umfangsnut 18 der in dem Wälzlager gelagerten Welle 17 eingeschnappt. Dadurch, daß sich die Bordscheibe 4 in dem an ihre Bohrung anschließenden Durchmesserbereich lagerauswärts trichterförmig verengt, wird das Einbringen der Bordscheibe 4 in die Umfangsnut 18 erleichtert. Nach dem Einschnappen der Zungen 9 in die Umfangsnut 18 ist der Außenlaufring 1 zwischen der Bordscheibe 4 einerseits und dem Gehäuseabsatz 19 andererseits in axialer Richtung fixiert. In gleicher Weise und durch die gleichen Teile ist auch der Kugelring 10, der auf dem Außenlaufring 1 verschiebbar gelagert ist, in axialer Richtung gesichert.

## Ansprüche

1. Radial-Wälzlager, bestehend aus einem Außenlaufring (1), in dessen Bohrung ein Kranz von zylindrischen Wälzkörpern (2) angeordnet ist, die durch ein in die Lagerbohrung eingesetztes elastisches Halteelement (11) gegen Herausfallen radial nach innen gehalten sind, und an deren beiden Stirnseiten Anlaufborde (3, 4) zu ihrer axialen Fixierung vorgesehen sind, **dadurch gekennzeichnet,** daß wenigstens der eine Anlaufbord durch eine lose Bordscheibe (4) gebildet ist, die durch das elastische Halteelement (11) in ihrer Position gehalten ist.

2. Wälzlager nach Anspruch 1, **dadurch gekennzeichnet,** daß die Bordscheibe (4) in einem radial äußeren Durchmesserbereich (5) eben ausgebildet ist, mit diesem Bereich gegen eine Stirnfläche (6) des Außenlaufringes (1) anliegt und den Außendurchmesser des Außenlaufringes (1) an wenigstens einigen Umfangsstellen radial überragt.

3. Wälzlager nach Anspruch 1 oder 2, **dadurch gekennzeichnet,** daß das Halteelement (11) durch ein rohrförmiges Teil (12) gebildet ist, von dessen Mantelfläche sich trichterförmig nach außen erweiternde Lamellen (13) ausgehen, die unter elastischer Vorspannung an den Wälzkörpern (2) anliegen.

4. Wälzlager nach Anspruch 3, **dadurch gekennzeichnet,** daß das rohrförmige Teil (12) an seinem der Bordscheibe (4) entgegengesetzten Ende durch einen Boden (14) verschlossen ist.

5. Wälzlager nach Anspruch 3 und 4, **dadurch gekennzeichnet,** daß die Lamellen (13) sich zum Boden (14) hin im Durchmesser erweitern.

6. Wälzlager nach einem oder mehreren der vorhergehenden Ansprüche, **dadurch gekennzeichnet,** daß das rohrförmige Teil (12) an seinem dem Boden (14) entgegengesetzten Ende einen Außendurchmesser aufweist, der annähernd dem Bohrungsdurchmesser der Bordscheibe (4) entspricht und daß dieses Ende wenigstens eine Haltenase (16) aufweist, die die Bordscheibe (4) an ihrer dem Wälzlager abgekehrten Seite hintergreift.

7. Wälzlager nach einem oder mehreren der Ansprüche 3 bis 6, **dadurch gekennzeichnet,** daß das Halteelement (11) aus polymerem Werkstoff besteht.

EP 0 407 733 A1

Fig. 1

Fig. 2

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 282 571 (INDUSTRIEWERK SCHAEFFLER) * Seite 3; Figuren 2-4 * | 1 | F 16 C 41/04 |
| A | | 4 | |
| A | DE-C- 660 435 (PITNER) * Das ganzes Dokument * | 1,2 | |
| A | US-A-3 168 774 (VÖLKENING) * Figuren 2,3 * | 1,4,6,7 | |
| A | CH-A- 490 624 (PITNER) * Das ganzes Dokument * | 1 | |
| A | FR-A-2 134 834 (PITNER) | | |
| A | FR-A-2 384 152 (NADELLA) | | |

**RECHERCHIERTE SACHGEBIETE (Int. Cl.5)**

F 16 C

Der vorliegende Recherchenbericht wurde für alle Patentansprüche erstellt

| Recherchenort | Abschlußdatum der Recherche | Prüfer |
|---|---|---|
| DEN HAAG | 24-09-1990 | ORTHLIEB CH.E. |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
  Dokument

EPO FORM 1503 03.82 (P0403)